# EUROPÄISCHE PATENTSCHRIFT

(11) **EP 2 037 786 B1**
(45) Veröffentlichungstag und Bekanntmachung des Hinweises auf die Patenterteilung: **25.10.2017**
(21) Anmeldenummer: 07730222.2
(22) Anmeldetag: 18.06.2007
(51) Int. Cl.: A47J 43/07, A47J 43/08

(54) **HANDRÜHRER MIT IM GEHÄUSE VERANKERTER GETRIEBEEINHEIT**
HAND MIXER COMPRISING A DRIVE UNIT WHICH IS ANCHORED IN THE HOUSING
BATTEUR À MAIN À UNITÉ DE TRANSMISSION ANCRÉE DANS LE BOÎTIER

(30) Priorität: 30.06.2006 DE 102006030226
(43) Veröffentlichungstag der Anmeldung: 25.03.2009
(73) Patentinhaber: BSH Hausgeräte GmbH, 81739 München (DE)
(72) Erfinder: GOLAVSEK, Samo, 3312 Prebold (SI); OGRIZEK, Darko, 3320 Velenje (SI); SEMEJA, Uros, 3327 Smartno Ob Paki (SI)
(86) Internationale Anmeldenummer: PCT/EP2007/056017
(87) Internationale Veröffentlichungsnummer: WO 2008/000647

(56) Entgegenhaltungen:
- AT-B- 358 761
- CH-A- 397 976
- DE-U1- 8 910 433
- US-A- 3 198 490

## Beschreibung

### Hintergrund der Erfindung

Die vorliegende Erfindung betrifft einen Handrührer oder -mixer, insbesondere für den Haushalt, gemäß dem Oberbegriff des Anspruchs 1.

### Stand der Technik

Aus der Schrift DE 60006695 T2 ist ein Handrühr- oder Mixgerät zum Antreiben von Quirlen oder anderen Rühr- oder Mixwerkzeugen bekannt, in dessen unterem Teil ein Motor untergebracht ist. Eine Welle des Motors trägt an ihrem vorderen Ende eine Antriebsschnecke, die mit zwei Schneckenrädern zusammenwirkt, die sich um eine Achse senkrecht zur Welle des Motors drehen und mit der Antriebsschnecke ein Untersetzungsgetriebe bilden. Die Schneckenräder sind mit je einer Kupplungsvorrichtung versehen, in die je ein Quirl eingesetzt werden kann. Das Dokument DE 89 10 433 U offenbart ein Antriebgerät für ein Handrühr- oder Mixgerät. Auch aus den Europäischen Patentschriften EP 1211972 B1 und EP 1221884 B1 sind Handmixer bekannt, in deren aus zwei Gehäuseschalen gebildeten Gehäusen eine Antriebsanordnung untergebracht ist, um in die Antriebsanordnung einsetzbare Mixwerkzeuge anzutreiben. Die Antriebsanordnung umfasst einen Motor und ein Getriebe mit einer Antriebsschnecke, die durch die Motorwelle angetrieben wird und in Schneckenräder eingreift. Bei Handrührern und -mixern ist es üblich, eine Getriebeeinheit über ein Tragjoch am Motor zu befestigen. Dazu ist das Tragjoch auf seiner einen Seite mit dem Motor und auf seiner anderen Seite mit einem Getriebelager der Getriebeeinheit fest verbunden. Motor und Getriebeeinheit bilden so eine stabile Antriebseinheit. Diese Antriebseinheit wird im Gehäuse über komplementäre Verankerungselemente an Motor und Gehäuse befestigt.

Wenn der Handrührer oder -mixer in Betrieb genommen wird, z.B. um Teig zu kneten, wirken durch die Rührwerkzeuge, die in die Getriebeeinheit eingesetzt sind, auf die Getriebeeinheit Kräfte. Diese Kräfte werden bei der vorgenannten Konstruktion des Handrührers oder - mixers über das Tragjoch und den Motor vom Gehäuse aufgenommen. Bei schwereren Arbeiten, z.B. beim Kneten von Mürb- oder Hefeteig oder beim Mischen von Hackfleischteig, können die Kräfte, die auf das Getriebe wirken, sehr groß werden. Deshalb muss das Tragjoch entsprechend stabil ausgebildet und fest mit Getriebeeinheit und Motor verbunden sein. Das Tragjoch ist aus diesem Grund üblicherweise aus Metall.

### Der Erfindung zugrunde liegende Aufgabe

Das Erfordernis einer stabilen Verbindung zwischen Getriebeeinheit und Motor kann die Konstruktion des Handmixers verkomplizieren, die Montage erschweren und den Materialaufwand erhöhen. Diese Faktoren können die Herstellung des Handrührers oder -mixers verteuern. Außerdem kann sich, etwa durch den erhöhten Materialaufwand oder die Notwenigkeit, schwere Metallteile einzusetzen, das Gewicht des Handrührers oder -mixers erhöhen, was sich häufig negativ auf seine Handhabbarkeit auswirkt, weil das Gerät üblicherweise im Betrieb vom Benutzer in der Hand gehalten werden muss.

Der vorliegenden Erfindung liegt deshalb die Aufgabe zugrunde, einen Handrührer oder - mixer zu schaffen, der die oben genannten Nachteile vermeidet und dennoch starken Belastungen des Getriebes standhält.

### Erfindungsgemäße Lösung

Zu Lösung der Aufgabe lehrt die vorliegende Erfindung einen Handrührer oder -mixer mit den Merkmalen des Anspruchs 1.

Dadurch, dass die Getriebeeinheit direkt am Gehäuse des Handrührers oder -mixers befestigt ist, kann ein Teil der auf das Getriebe wirkenden Kräfte direkt auf das Gehäuse geleitet werden, ohne den Umweg über einen Motor. Die Verbindung zum Motor kann entsprechend leichter ausgeführt werden, was Materialkosten und Gewicht einsparen und einfachere Montagetechniken möglich machen kann.

### Bevorzugte Ausgestaltungen der Erfindung

Nach der Erfindung ist die Getriebeeinheit über mindestens ein Getriebelager der Getriebeeinheit am Gehäuse befestigt. Vorzugsweise werden im Wesentlichen alle beim Betrieb auf die Getriebelager wirkenden Kräfte direkt auf das Gehäuse geleitet. Zum Befestigen des mindestens einen Getriebelagers sind vorzugsweise im Inneren des Gehäuses Vorsprünge ausgebildet, an die das mindestens eine Getriebelager angreift. Besonders vorzugsweise ist das mindestens eine Getriebelager an zwei seiner gegenüberliegenden Enden an zwei einander gegenüberliegenden Innenflächen des Gehäuses abgestützt. Dadurch kann das mindestens eine Getriebelager so zwischen den beiden Innenflächen des Gehäuses fixiert werden, dass es in keine Richtung ausweichen kann. Hierdurch ist erreichbar, dass auf Befestigungshilfsmittel, wie Schrauben, Nieten, Klemmen oder Klebstoff, verzichtet werden kann.

Das mindestes eine Getriebelager ist vorzugsweise aus Metall, besonders vorzugsweise aus Metallblech. Ein bevorzugtes Getriebelager weist zwei Öffnungen auf, in denen Wellen gelagert sind, auf denen Getrieberäder angeordnet sind. Ein bevorzugtes Getriebelager hat einen U-förmigen Querschnitt, um seine Stabilität zu erhöhen.

Vorzugsweise ist die die Getriebeeinheit über zwei Getriebelager der Getriebeeinheit am Gehäuse befestigt. In einer bevorzugten Ausführung der Erfindung werden die beiden Getriebelager durch die Befestigung am Gehäuse jeweils in einer festen Position gehalten, sodass die Getriebeeinheit nicht nur im Gehäuse fixiert, sondern auch in sich stabilisiert wird. Die Befestigung der Getriebelager am Gehäuse kann in dieser Ausführung der Erfindung andere steife Verbindungen zwischen den Getriebelagern ersetzen.

Eine bevorzugte Getriebeeinheit umfasst eine Schnecke, die auf der Welle des Motors aufsitzt, und mindestens ein, vorzugsweise zwei Schneckenräder als Getrieberäder, die in die Schnecke eingreifen. Die Schneckenräder treiben Kupplungselemente an, an die Werkzeuge angekuppelt werden können, um sie rotierend um eine Achse anzutreiben, die im Wesentlichen senkrecht zur Längsachse der Motorwelle verläuft. Die Getriebeeinheit der Erfindung weist außerdem ein Tragjoch auf, wobei das mindestens eine Getriebelager mit dem Tragjoch verbunden ist. Dies kann die Montage vereinfachen, weil Tragjoch, Getriebelager und Getrieberäder bei der Montage als eine Einheit handhabbar sind. In einer bevorzugten Ausführung der Erfindung ist die Verbindung des Getriebelagers mit dem Tragjoch im Wesentlichen eine Vorfixierung zum Zweck der Montage und trägt nicht wesentlich dazu bei, das Getriebe unter den Belastungen des Betriebs zu fixieren oder ihm Stabilität zu verleihen. Das Getriebelager ist durch eine Rastverbindung am Tragjoch befestigt.

In einer bevorzugten Ausführung der Erfindung sind zwei Getriebelager mit dem Tragjoch verbunden. Vorzugsweise stützt das Tragjoch die zwei Getriebelager gegeneinander ab. Hierdurch können die Vorsprünge im Gehäuse und das Tragjoch zum Fixieren der Getriebeeinheit am Gehäuse vorteilhaft zusammenwirken. Besonders vorzugsweise bilden Tragjoch, Getriebelager und Getrieberäder eine Schnellmontageeinheit, die ohne zusätzliche Befestigungsmittel wie Schrauben, Nieten, Klemmen oder Klebstoff zusammengesetzt werden kann. Das Tragjoch kann aus Metall gefertigt sein. Alternativ kann es auch aus Kunststoff bestehen, besonders vorzugsweise aus einem thermoplastischen Kunststoff. Es ist vorzugsweise im Spritzgussverfahren hergestellt. Nach der Erfindung ist das Tragjoch unmittelbar am Gehäuse abgestützt, um der Getriebeeinheit zusätzliche Stabilität zu verleihen, indem beim Betrieb des Handrührers oder -mixers ein Teil der auf die Getriebeeinheit wirkenden Kräfte über das Tragjoch vom Gehäuse aufgenommen wird. Besonders vorzugsweise ist das Tragjoch nicht nur im Gehäuse abgestützt, sondern in ihm fixiert. Zum Abstützen oder fixieren des Tragjochs sind vorzugsweise im Inneren des Gehäuses Vorsprünge ausgebildet, an die das Tragjoch angreift.

Ergänzend zu seiner Abstützung, vorzugsweise Fixierung, am Gehäuse kann das Tragjoch auch am Motor befestigt sein, der seinerseits am Gehäuse befestigt ist, sodass beim Betrieb des Handrührers oder -mixers ein Teil der auf die Getriebeeinheit wirkenden Kräfte über das Tragjoch und den Motor vom Gehäuse aufgenommen wird. Das Tragjoch ist vorzugsweise durch Klemm- oder Rastverbindungen am Motor befestigt. Besonders vorzugsweise bilden der Motor, das Tragjoch und die Getriebeeinheit eine Schnellmontageeinheit, die ohne zusätzliche Befestigungsmittel, wie Schrauben, Nieten, Klemmen oder Klebstoff, zusammengesetzt werden kann.

Der Motor ist vorzugsweise durch Verankerungselemente, vorzugsweise Verankerungsnasen, auf seiner Mantelfläche, die in korrespondierende Motorverankerungselemente, vorzugsweise Verankerungshülsen, im Inneren des Gehäuses eingreifen, am Gehäuse befestigt. Bevorzugte Motorverankerungselemente sind auf zwei gegenüberliegenden Innenseiten des Gehäuses angeordnet. Besonders vorzugsweise sind auf jeder Innenseite zwei in Längsrichtung des Motors beabstandete Motorverankerungselemente vorgesehen.

Der erfindungsgemäße Handrührer oder -mixer ist vorzugsweise für die Verwendung in der Gastronomie oder im Haushalt geeignet, besonders vorzugsweise für die Zubereitung von Speisen. Hierzu können vorzugsweise wahlweise verschiedene Werkzeuge in die Kupplungseinrichtungen der Getriebeeinheit eingesetzt werden, z.B. verschiedene Arten von Knethaken und Rührbesen. Ein bevorzugter Handrührer oder -mixer weist zusätzlich noch eine Kupplungseinrichtung auf, die auf der der Getriebeeinheit gegenüber liegenden Seite des Motors auf der Motorwelle angeordnet ist. Hier können ebenfalls, besonders bevorzugt wahlweise verschiedene Werkzeuge angekuppelt werden, z.B. ein Mixstab, ein Schneebesen oder ein Universalzerkleinerer.

Die vorliegende Erfindung erleichtert vorteilhaft Konstruktion und Montage moderner Handrührers oder -mixers und trägt darüber hinaus zu deren Gewichtsreduzierung bei.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Fig. 1:: eine perspektivische Explosionsdarstellung des erfindungsgemäßen Handrührers mit der Antriebseinheit aus Motor und Getriebe und den Schalen des Gehäuses; und
- Fig. 2:: eine perspektivische Darstellung des Handrührers aus Fig. 1, bei dem die Antriebseinheit auf einer Seite im Gehäuse fixiert ist.

### Ausführliche Beschreibung eines Ausführungsbeispiels

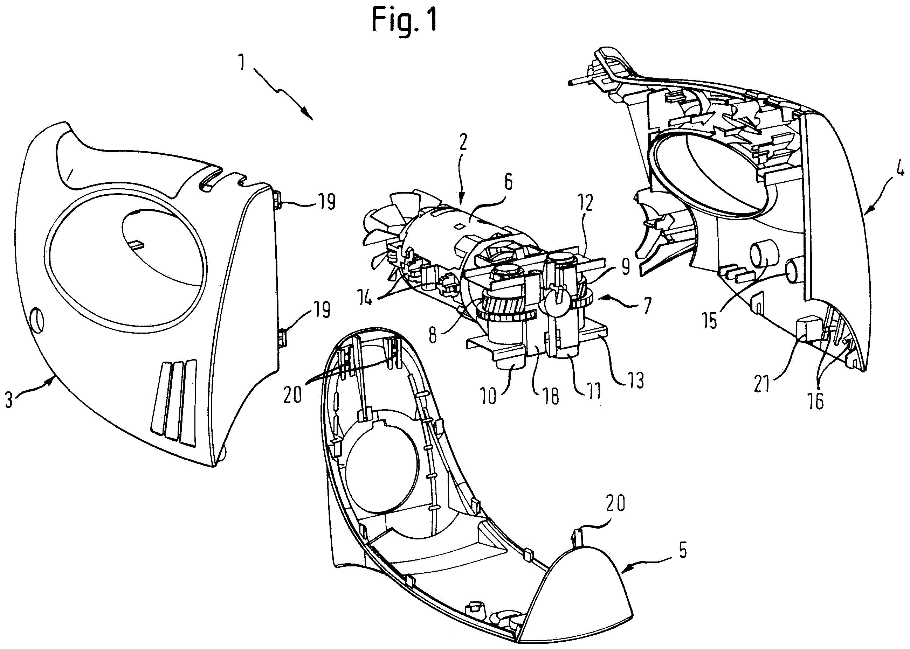

Die Explosionsdarstellung des Handrührers 1 in Fig. 1 zeigt eine Antriebseinheit 2 sowie zwei im Wesentlichen spiegelsymmetrische Seitenschalen 3, 4 und eine Bodenschale 5, die zusammen das Gehäuse des Handrührers 1 bilden, das die Antriebseinheit 2 umschließt. Im oberen Bereich des Gehäuses ist ein Griff ausgebildet, an dem der Benutzer das Gehäuse im Betrieb hält, im unteren Bereich des Gehäuses ist die Antriebseinheit 2 untergebracht.

Die Antriebseinheit 2 hat einen Motor 6, dessen Welle ein Schnecke (beide nicht gezeigt) eine Getriebeeinheit 7 antreibt. Neben der Schnecke weist die Getriebeeinheit zwei Schneckenräder 8, 9 auf, die in die Schnecke eingreifen und mit ihr ein Untersetzungsgetriebe bilden. Die Schneckenräder 8, 9 sitzen auf parallelen Hülsen 10, 11, die als Wellen in Öffnungen in zwei parallelen Schneckenradlagern 12, 13 gelagert sind. Die Schneckenradlager 12, 13 sind im Wesentlichen lang gestreckte flache Bleche, die an ihren Längsseiten in einem schmalen Bereich nach außen hin gekröpft sind, sodass sie einen flachen U-förmigen Querschnitt aufweisen. Die Hülsen 10, 11 bilden außerdem Kupplungseinrichtungen, in die Werkzeuge, z.B. Knethaken oder Rührbesen, zum Ankuppeln eingesetzt werden können.

Der Motor 2 ist auf zwei gegenüberliegenden, jeweils zu den Seitenschalen 3, 4 des Gehäuses weisenden Außenseiten mit Verankerungsnasen 14 ausgestattet, die in Verankerungshülsen 15 der Seitenschalen 3, 4 eingreifen, um den Motor 6 fest im Gehäuse zu verankern. Auf jeder Seite des Motors 6 sind zwei in Längsrichtung des Motors beabstandete Verankerungsnasen 14 und entsprechend in jeder Gehäuseschale 3, 4 zwei Verankerungshülsen 15 vorgesehen.

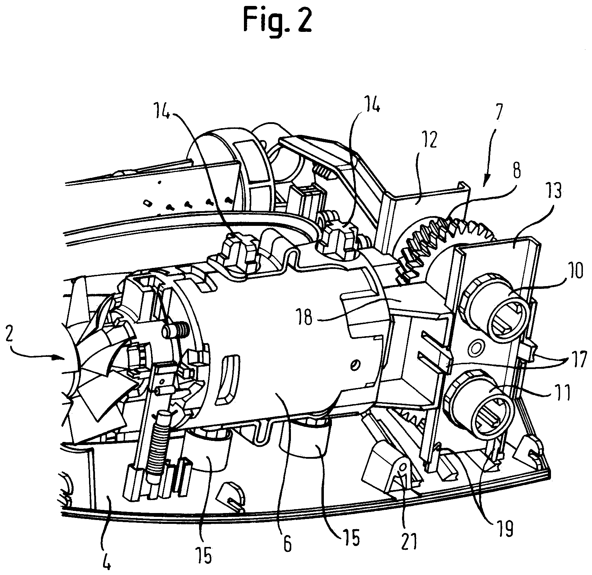

Die Schneckenradlager 12, 13 sind bei zusammengesetztem Handrührer oder -mixer jeweils mit einer Schmalseite an der einen 3 und mit einer Schmalseite an der anderen Gehäuseschale 4 fixiert. Wie in Fig. 2 exemplarisch für die Fixierung eines Schneckenradlagers 13 in einer Gehäuseschale 4 zu sehen ist, weisen die Gehäuseschalen 3, 4 zur Abstützung der Schneckenradlager 12, 13 Vorsprünge 16 auf, die auf der Außenseite der Getriebeeinheit 7 in die Innenseiten der U-förmigen Schneckenradlager 12, 13 eingreifen. Außerdem sind die Schneckenradlager 12, 13 durch Rastelemente 17 an einem vorzugsweise aus Kunststoff gefertigten Tragjoch 18 befestigt. Das Tragjoch 18 stützt die Schneckenradlager 12, 13 auf ihrer zum Inneren der Getriebeeinheit 7 weisenden Seite gegeneinander ab. Durch das Zusammenwirken von Vorsprüngen 16 und Tragjoch 18 wird die Getriebeeinheit fest im Gehäuse verankert. Das Tragjoch 18 ist außerdem am Motor 2 befestigt.

Beim Zusammenbau des Handrührers oder -mixers 1 wird in einem ersten Schritt die Antriebseinheit 2 montiert, wobei das Tragjoch 18 auf den Motor 2 aufgesetzt, die hülsenförmigen Wellen 10, 11 der Schneckenräder 8, 9 durch die Öffnungen der Schneckenradlager 12, 13 geführt und die Schneckenradlager 12, 13 mittels der Rastelemente 17 am Tragjoch 18 fixiert werden. In einem zweiten Schritt wird die Antriebseinheit 2 in eine Seitenschale 4 des Gehäuses eingesetzt, wobei die Verankerungsnasen 14 des Motors 2 in die korrespondierenden Verankerungshülsen 15 der Seitenschale 4 greifen und die Vorsprünge 16 der Seitenschale 4 in die Innenseiten der U-förmigen Schneckenradlager 12, 13 eingreifen. In einem dritten Schritt wird die andere Seitenschale 3 des Gehäuses aufgesetzt, wobei auch auf dieser Seite die Verankerungsnasen 14 in die korrespondierenden Verankerungshülsen 15 und die Vorsprünge 16 in die Innenseiten der Schneckenradlager 12, 13 eingreifen, sodass Motor 2 und Getriebeeinheit 7 im Gehäuse fixiert sind. Durch die Öffnung im Gehäuseboden, die später durch die Bodenschale 5 geschlossen wird, kann der Sitz der Antriebseinheit 2 und ihrer Komponenten von außen überprüft und gegebenenfalls korrigiert werden. Die beiden Seitenschalen 3, 4 des Gehäuses werden anschließend durch Rastelemente 19 fest verbunden. Schließlich wird das Gehäuse durch Anbringen der Bodenschale 5 geschlossen. Die Bodenschale 5 wird durch Rastelemente 20 und verschraubbare Bereiche 21 an den Gehäuseseitenschalen 3, 4, 5 befestigt.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Die vorliegende Erfindung erleichtert vorteilhaft Konstruktion und Montage moderner Handrührers oder -mixers 1 und trägt darüber hinaus zu deren Gewichtsreduzierung bei.

## Patentansprüche

1. Handrührer oder -mixer (1), insbesondere für den Haushalt oder die Gastronomie, mit einem Gehäuse, in dem ein Motor (6) und eine vom Motor (6) angetriebene Getriebeeinheit (7), an die mindestens ein Werkzeug ankuppelbar ist, um das Werkzeug rotierend anzutreiben, angeordnet sind, wobei die Getriebeeinheit (7) so am Gehäuse befestigt ist, dass beim Betrieb des Handrührers oder -mixers (1) ein Teil der auf die Getriebeeinheit (7) wirkenden Kräfte direkt auf das Gehäuse geleitet wird, wobei die Getriebeeinheit (7) über mindestens ein Getriebelager (12, 13) der Getriebeeinheit (7) am Gehäuse befestigt ist, wobei die Getriebeeinheit (7) ein Tragjoch (18) aufweist, **dadurch gekennzeichnet, dass** das Tragjoch (18) durch
mindestens eine Rastverbindung (17) mit dem mindestens einen Getriebelager (12, 13) verbunden ist, wobei das Tragjoch (18) unmittelbar am Gehäuse abgestützt ist, sodass beim Betrieb des Handrührers oder -mixers (1) ein Teil der auf die Getriebeeinheit (7) wirkenden Kräfte über das Tragjoch (18) vom Gehäuse aufgenommen wird.

2. Handrührer oder -mixer (1) nach Anspruch 1, **dadurch gekennzeichnet, dass** die Getriebeeinheit (7) über zwei Getriebelager (12, 13) der Getriebeeinheit (7) am Gehäuse befestigt ist.

3. Handrührer oder -mixer (1) nach Anspruch 1, **dadurch gekennzeichnet, dass** das mindestens eine Getriebelager (12, 13) mit dem Tragjoch (18) verbunden ist.

4. Handrührer oder -mixer (1) nach einem der Ansprüche 1 oder 3, **dadurch gekennzeichnet, dass** die Getriebeeinheit (7) zwei Getriebelager (12, 13) aufweist, die durch das Tragjoch (18) gegeneinander abgestützt sind.

5. Handrührer oder -mixer (1) nach einem der Ansprüche 1 bis 4, **dadurch gekennzeichnet, dass** das Tragjoch (18) aus Kunststoff hergestellt ist.

6. Handrührer oder -mixer (1) nach einem der Ansprüche 1 bis 5, **dadurch gekennzeichnet, dass** das Tragjoch (18) am Motor (6) befestigt ist und der Motor (6) am Gehäuse befestigt ist, sodass beim Betrieb des Handrührers ein Teil der auf die Getriebeeinheit (7) wirkenden Kräfte über das Tragjoch (18) und den Motor (6) vom Gehäuse aufgenommen wird.

## Claims

1. Hand mixer or mixer (1), in particular for domestic or catering purposes, having a housing, in which a motor (6) and a drive unit (7) driven by the motor (6), to which at least one tool can be coupled, are arranged in order to drive the tool in a rotating manner, wherein the drive unit (7) is fastened to the housing such that during operation of the hand mixer or mixer (1), part of the forces acting on the drive unit (7) is routed directly to the housing, wherein the drive unit (7) is fastened to the housing by way of at least one transmission bearing (12, 13) of the drive unit (7), wherein the drive unit (7) has a yoke (18), **characterised in that** the yoke (18) is connected to the at least one transmission bearing (12, 13) by at least one snap-on connection (17), wherein the yoke (18) is supported directly against the housing so that during operation of the hand mixer or mixer (1) part of the forces acting on the drive unit is received by the housing by way of the yoke (18).

2. Hand mixer or mixer (1) according to claim 1, **characterised in that** the drive unit (7) is fastened to the housing by way of two transmission bearings (12, 13) of the drive unit (7).

3. Hand mixer or mixer (1) according to claim 1, **characterised in that** the at least one transmission bearing (12, 13) is connected to the yoke (18).

4. Hand mixer or mixer (1) according to one of claims 1 or 3, **characterised in that** the transmission unit (7) has two transmission bearings (12, 13), which are supported against one another by the yoke (18).

5. Hand mixer or mixer (1) according to one of claims 1 to 4, **characterised in that** the yoke (18) is produced from plastic.

6. Hand mixer or mixer (1) according to one of claims 1 to 5, **characterised in that** the yoke (18) is fastened to the motor (6) and the motor (6) is fastened to the housing so that during operation of the hand mixer part of the forces acting on the drive unit (7) is received by the housing by way of the yoke (18) and the motor (6).

## Revendications

1. Batteur manuel ou mixeur manuel (1), notamment pour usage ménager ou pour la gastronomie, comprenant un boîtier dans lequel sont disposés un moteur (6) et une unité de transmission (7) entraînée par le moteur (6), à laquelle au moins un outil peut être couplé afin d'entraîner l'outil de manière rotative, l'unité de transmission (7) étant fixée sur le boîtier de manière à ce que lors du fonctionnement du batteur manuel ou mixeur manuel (1), une partie des forces agissant sur l'unité de transmission (7) soit directement dirigée sur le boîtier, l'unité de transmission (7) étant fixée sur le boîtier par l'intermédiaire d'au moins un palier de transmission (12, 13) de l'unité de transmission (7), l'unité de transmission (7) présentant une travée de support (18), **caractérisé en ce que** la travée de support (18) est raccordée à l'au moins un palier de transmission (12, 13) par au moins une liaison d'enclenchement (17), la travée de support (18) étant directement appuyée sur le boîtier, de sorte que lors du fonctionnement du batteur manuel ou mixeur manuel (1), une partie des forces agissant sur l'unité de transmission (7) est absorbée par le boîtier par l'intermédiaire de la travée de support (18).

2. Batteur manuel ou mixeur manuel (1) selon la revendication 1, **caractérisé en ce que** l'unité de transmission (7) est fixée sur le boîtier par l'intermédiaire de deux paliers de transmission (12, 13) de l'unité de transmission (7).

3. Batteur manuel ou mixeur manuel (1) selon la revendication 1, **caractérisé en ce que** l'au moins un palier de transmission (12, 13) est relié à la travée de support (18).

4. Batteur manuel ou mixeur manuel (1) selon l'une quelconque des revendications 1 ou 3, **caractérisé en ce que** l'unité de transmission (7) présente deux paliers de transmission (12, 13) qui sont soutenus l'un contre l'autre par la travée de support (18).

5. Batteur manuel ou mixeur manuel (1) selon l'une quelconque des revendications 1 à 4, **caractérisé en ce que** la travée de support (18) est fabriquée en matière plastique.

6. Batteur manuel ou mixeur manuel (1) selon l'une quelconque des revendications 1 à 5, **caractérisé en ce que** la travée de support (18) est fixée sur le moteur (6) et **en ce que** le moteur (6) est fixé sur le boîtier de sorte que lors du fonctionnement du batteur manuel, une partie des forces agissant sur l'unité de transmission (7) est absorbée par le boîtier par l'intermédiaire de la travée de support (18) et du moteur (6).
